# EUROPEAN PATENT APPLICATION

(11) **EP 3 135 471 A1**
(43) Date of publication of application: **01.03.2017**
(21) Application number: 15460048.0
(22) Date of filing: 22.08.2015
(51) Int. Cl.: B32B 5/02, B32B 5/14, B32B 5/18, B32B 5/24, B32B 27/30, B32B 3/02, B32B 3/06, E04B 1/00

(54) **THERMAL AND WATER INSULATING FITTING ELEMENT FOR LOAD-BEARING STRUCTURE IN BUILDINGS**

(71) Applicant: Andrzej, Llnicki, 85-356 Bydgoszcz (PL)
(72) Inventor: Andrzej, Llnicki, 85-356 Bydgoszcz (PL)
(74) Representative: Jankowski, Piotr

(57) **Abstract**

The present invention relates to molding equipment intended for thermal and water insulation in wall constructions, intended for the construction of buildings. Fitting has the form of a plate with a contour of a rectangular prism, and is composed of the core 1, element 3 and the strengthening reinforcement layer 4, the side surfaces of the fittings are alternately - top, bottom, rectangular select - the projections 2, arranged at half height, over the entire length of the surface the short sides of the block, and the molding face has through holes for the studs 3 arranged symmetrically over the entire surface at an equal distance, wherein the opening area is ≥ 10% of the total face of the molding, the outer layer 4 is composed of a polymer cement and / or glue, which is submerged in a glass fiber mesh.

## Description

The present invention relates to molding equipment intended for thermal insulation and water in wall constructions, intended for the construction of buildings.

There are known layered wall panels, eg. The Polish Patent No. 95605, title: The layered wall panel claddings, which being characterized in that it comprises two multi-layer, multi-material, composite load bearing liners separated by the inner core - wherein the liner is made of two different in terms of the mechanical properties composite materials complex technological.

From the Polish patent No. 170894 wall cladding of the building, which essence is that the thermal insulation between the core and the wall of the building is a layer of soft foam adhering closely to the walls of the building. This layer and the core insulation - forming a shaped body are connected together by foaming.

Also known is the wall plate insulated multi-layer description of Polish utility model Ru.22886. This element consists of the external cladding panels, a layer of thermal insulation, vapor barrier, to fill the void with concrete lining and the outer plates.

From Polish Patent No 197588 there is known a block of cellular concrete, consisting of two layers of concrete, characterized in that between the layers of concrete (1) and (2) there is arranged a perforated insert (3) with through holes (4), wherein the outer surfaces of the combined is a glue (5) with a concrete layer (1) and (2).

The aim of the invention is to provide a new molded construction having good insulating and against moisture properties, simultaneously durability and strength, allowing for the use as a layer between the foundation and walls of the building, which is the thermal and water insulation between the foundation and the vertical wall, eliminating the moisture soaking and thermal bridges at the ceiling.

The essence of the invention is a fitting construction of the layer structure, which consists of a core of light material having good insulating properties, which has a series of holes in which the stiffening elements are arranged in the form of the material carrying the vertical load, and the bonding of the outer layer and the stiffening elements the entire structure while constituting a bonding layer to a connecting fittings welds, adhesives, etc. in the process of erecting buildings. Body is profiled and joined the length to "bookmark" in order to eliminate thermal bridges and water soaking in.

Fitting has the form of a plate with a contour cuboid shape and consists of a core 1, element 3 and the strengthening reinforcement layer 4, the side surfaces of the fittings have alternately - top, bottom, rectangular selected - projections 2, arranged at half height, over the entire length of the surface of less the sides of the block, and on the face of the fitting has holes to "caps" 3 constituting the filling mass of polymer concrete and are arranged symmetrically over the entire surface of the molding at an equal distance, the area of the openings relative to the surface of the plate is ≥ 10 % of the total face of the molding. Fitting is made of extruded polystyrene, and the outer surfaces are covered with a molded outer layer 4, composed of a polymer cement and / or glue, which is submerged in a glass fiber mesh. Thus, a surface enhanced and well receiving any mortar. The use of such coverings with a thickness of 2-3 cm gives a perfect, smooth, impermeable and heat-insulating underlay for all linings.

The forms of the invention are characterized by low thermal conductivity, low water absorption, combined with high compressive strength, allow for a variety of uses panels of the invention minutes as wall insulation, but primarily as thermal insulation and water between the foundation and the vertical wall.

The use of panels removes soaking moisture from the foundation, fitting is resistant to water, due to the low degree of porosity of the concrete of the framework of the process there is no capillary "pull" water.

Plates are glued directly to the foundation, and walls are put on them puts, molded design allows the resignations of conduct thermal insulation of the foundation wall deep down to the level of foundations, because they eliminate thermal bridges at the ceiling. Composite molded parts have low value "k" which is equivalent to the value resulting from the thermal resistance in a vertical or two horizontal directions. Due to the specific use Blocks "wall" resulting value "k" is approx. 0.050 W / mK.

Fitting of the elements of reinforcement - "caps" polymer concrete transfers significant compressive stress in the foundation wall of the object, allowing for the construction of up to four ground floors and uniform distribution of reinforcing elements allows any crop molded in length depending on the needs without losing the strength of the whole structure.

They are also the ideal base for ceramic tiles on walls and floors, and even under finish. Fittings also have good acoustic properties, are resistant to mold, fungus, and are resistant to alkali.

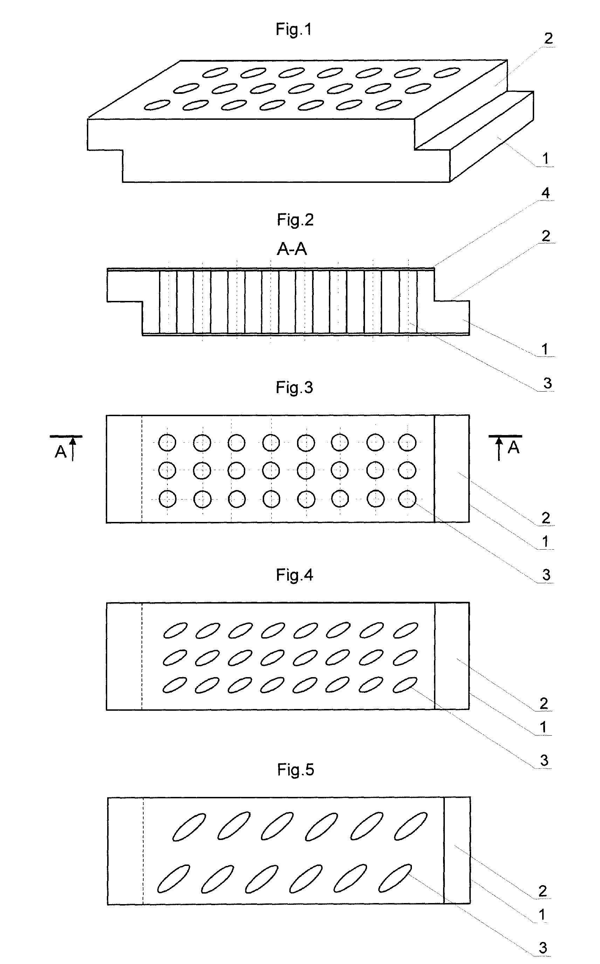

Fitting shown in more detail in an embodiment in which Figure 1 shows the fitting in perspective view, Figure 2 shows the fitting in cross section, and fig. 3, 5 fitting in a top view.

In view of the present profiles of different widths, to maintain the same compression strength applied concrete filling holes with the surface of 3,14cm²-9,0cm², ie. In the core molding.

Fittings have the form of parallelepipeds with a length of 600mm, 50mm, or other and widths of 115/150/175/200/240mm.

| **Width of fitting** | **Length of fitting** | **Area of fitting** | **Amount of caps** | **Diameter** | **Radius** | **Area of 1 concrete cap** | **Area of concrete** | **% equity of concrete** |
|---|---|---|---|---|---|---|---|---|
| *cm* | *cm* | *cm*² | *szt.* | *cm* | *cm* | *cm*² | *cm*² | |
| 11,50 | 60,00 | 690,00 | 16 | 2,50 | 1,25 | 4,9086 | 78,5375 | 11,38 |
| **15,00** | **60,00** | **900,00** | **24** | **2,50** | **1,25** | **4,9086** | **117,8063** | **13,09** |
| 17,50 | 60,00 | 1 050,00 | 24 | 2,50 | 1,25 | 4,9086 | 117,8063 | 11,22 |
| 24,00 | 60,00 | 1 440,00 | 32 | 2,50 | 1,25 | 4,9086 | 157,0750 | 10,91 |

Fitting 15 cm x 60 cm with 24 "plugs" with a diameter of 2.5 cm
Fitting 15 cm x 60 cm 12 "plugs" with dimensions 4.5 cm x 2.0 cm

There is also possible set with the "caps" concrete in the shape of a rectangle or other figures, of course, respecting the principle of uniform distribution and ratio of surface to surface shaped holes

## Claims

1. Fitting has the form of a plate with a contour cuboid shape, **characterized in that** it consists of the core 1, element 3 and the strengthening reinforcement layer 4, the side surfaces of the fittings are alternately - top, bottom, rectangular selected - the projections 2, arranged at half height over the entire length of the surface of the shorter sides of the block, and the molding face has through-hole filled with reinforcements in the form of "caps", symmetrically distributed over the entire surface at an equal distance, wherein the opening area is ≥ 10% of the total face of the molded and the outer layer 4 forms a polymer cement and / or glue, the glass fiber mesh.

2. Fitting according to claim 1, **characterized in that** the core is made of extruded polystyrene.

3. Fitting according to claim 1, **characterized in that** the reinforcements - caps are of polymer concrete.
